# EUROPEAN PATENT SPECIFICATION

(11) **EP 1 854 623 B1**
(45) Date of publication and mention of the grant of the patent: **10.09.2014**
(21) Application number: 07015621.1
(22) Date of filing: 14.01.2003
(51) Int. Cl.: B32B 3/00, B65D 81/34, B65D 65/40

(54) **Self-venting peelable microwaveable vacuum skin package**
Selbst-ventilierende abziehbare mikrowellenerhitzbare Vakuumverpackung
Emballage moulant sous vide, pour cuisson au micro-ondes, pelable, a auto-ventilation

(30) Priority: 18.01.2002 US 51584
(43) Date of publication of application: 14.11.2007
(62) Divisional of application: 03702106.0
(73) Proprietor: Cryovac, Inc., Duncan, SC 29334 (US)
(72) Inventor: Vadhar, Parimal, Greer, SC 29650 (US); Brady, Sean, Greer, SC 29651 (US); Rosinski, Michael J., Woodruff, SC 29388 (US); Womack, Jeff, Maulin, SC 29662 (US); Owensby, Joseph, Spartanburg, SC 29301 (US)
(74) Representative: UEXKÜLL & STOLBERG

(56) References cited:
- US-A- 4 705 707
- DATABASE WPI Section Ch, Week 199931 Derwent Publications Ltd., London, GB; Class A92, AN 1999-366551 XP002238446 & JP 11 139465 A (TOPPAN PRINTING CO LTD) 25 May 1999 (1999-05-25)

## Description

### Field of the Invention

The present invention relates to a method of preparing a microwaveable vacuum skin package suitable for the presentation and preservation of a cooked and subsequently refrigerated food product and suitable for use in cooking, re-heating and/or thawing the packaged food product in a microwave oven without the need for prior removal of the top web or prior manual opening of the package.

### Background of the Invention

A wide variety of products, especially food products such as fresh red meat such as pork loins, processed meat such as sausages, cheese, ready to eat or prepared meals, and the like, are being offered in visually attractive packages made from two thermoplastic webs using the vacuum skin packaging process.

Vacuum skin packaging (VSP) is a process well known in the art for using a thermoplastic packaging material to enclose a food product.

If a packaged food product needs to be thawed and/or cooked and/or re-heated before eating, this is sometimes done by using a microwaveable support member, typically a tray, and removing the top web just before putting the tray in the microwave oven. Unfortunately, food processed in this way tends to become dry in texture and consistency rather than remaining tender and moist.

Furthermore, when the product to be thawed and/or cooked, or re-heated, contains some sort of sauce, juice, oil, butter, wine, seasoning, marinating liquid, etc., this will often splatter on the inner surfaces of the microwave oven.

The possibility of putting the package into the oven without removing the top web would therefore be highly desirable. By keeping the top web on top of the product in the microwave oven, the food product will be cooked in a healthy manner, e.g. by steaming, and the inner surfaces of the oven will be kept clean.

In microwaving, whether the food product is a raw or a cooked product and has to be cooked or just heated, considerable water vapor pressure is generated within the package during the heating cycle. Although cooking or heating under a slight overpressure of vapor improves the taste and texture of the end product, an excessively high overpressure within the package should be avoided to ensure against sudden explosions of the package within the oven. This is particularly true with VSP packages, because the top and bottom webs (or the top web and tray if no bottom web is present) are sealed together over a wide area (corresponding to the whole support surface not occupied by the product), and because the top web is highly formable and will therefore be overstretched by the excess vapor. This is especially undesirable for VSP packages because, when the package is removed from the oven at the end of the cooking or heating step, the overstretched film will drape down over the cooked product, giving an unpleasant appearance to the package.

In common practice, the control of vapor pressure in microwave ovenable packages is achieved by creating at least one venting hole just before cooking, either by piercing the top web of the package before inserting it in the oven, or by removing the protective label covering a venting hole created during the packaging step. Alternatively, the sealed area is narrowed in a limited zone to create at that point a weakness in the seal. The seal will thus open up in that zone upon the generation of the overpressure. Another alternative is the use of a valve inserted into the top web of a microwaveable package.

None of these alternatives is suitable for a VSP package.

First, the venting hole would in fact be required to be positioned in that part of the top web that covers the food product. The presence of a venting hole would be ineffective if it were located in the seal area, i.e. where the top web is sealed to the bottom web or the tray. Creating a venting hole in the package, by piercing the top web, could damage the packaged product. If the top web were punctured before packaging (to avoid damaging the product), creating the hole may give problems during the stretching step, because the top web could tear in the hole area, and the tear could propagate out from the hole.

As to the second alternative, reducing the area of the seal in a controlled manner is difficult in a VSP package. This is because the area where the top web is sealed to the bottom web or the tray is large and varies widely depending on the size of the support and of the product.

The third alternative, the use of an inserted valve, introduces another step to package preparation, and therefore additional cost to the package.

US-A-4,705,707 addresses the problem of packaging a food product (popcorn) in a microwaveable package where moisture loss and the high temperatures generated in the microwave process are primary considerations. Secondarily, this reference provides a peelable seal embodiment comprising the use of a polyester or copolyester sealant. Such sealant, in accordance with this reference, provides high temperature protection to the package, and the overall construction of the laminate provides low moisture loss. Peelability, where desired, is achieved by the broad sealing range of polyester, and a lower sealing temperature is chosen for the portion of the package where the peel seal is desired. This reference does not disclose or deal with the problems, discussed above, associated with a VSP package.

Further, it is known from JP 11 139465 A to use partial heat sealing to achieve a peelable seal when heat processing frozen food in a microwave oven, i.e. a heat sealing portion of the package is partially sealed so as to peel off this portion when the internal pressure of the package increases during the microwave step.

It has now been found that if a food product is packaged in a VSP package made with certain microwaveable thermoplastic materials, preferably materials that are substantially transparent to microwave energy, the package maintains its integrity before microwaving, i.e. the seal between the top web and the bottom web or support member is sufficiently strong to avoid premature peeling of the top web from the bottom web or support member. Yet, it is possible to thaw and/or cook, or re-heat, the packaged product in a microwave oven without the need of removing, loosening or perforating the top lid before putting the package into the oven, without any risk of explosion, or of excessive stretching of the top web. The top web will in fact rise above the product, caused by the pressure of the vapor released by the product or by the sauce, oil, etc. accompanying the product. The top web will not be overstretched, because a channel for the excess vapor to vent off will then be created, between the top web and the bottom web or support member, from the packaged product to the outer-most edge of the package. The top web will remain raised over the product until the heating is done, allowing the steaming of the product, and will then return to its original position as soon as the heating is over. After the microwaving of the package is completed, the top web is peelably adhered to the bottom web or support member. This allows the top web to be easily peeled away.

### Summary of the Invention

The invention relates to a method of preparing a microwaveable vacuum skin package comprising:
a) providing a support member having an upper surface and a lower surface;
b) providing a bottom web having an upper surface and a lower surface, the bottom web comprising
   i) a sealant layer comprising a blend of between 60% and 90%, by weight of the sealant layer, of ethylene/vinyl acetate copolymer, and between 10% and 40%, by weight of the sealant layer, of polypropylene or propylene/ethylene copolymer; and
   ii) an oxygen barrier layer comprising a polymer selected from the group consisting of ethylene/vinyl alcohol copolymer, vinylidene chloride copolymer, polyamide, polyacrylonitrile, and polyester;
   the sealant layer of the bottom web forming the upper surface of the bottom web; and
   the lower surface of the bottom web adhered to the upper surface of the support member;
c) placing a food product on the upper surface of the bottom web;
d) covering the food product with a top web, the top web having an upper and lower surface, by draping the top web over the food product, in a vacuum skin packaging process, such that the top web substantially conforms to the shape of the food product; and such that the top web is sealed at its lower surface to the upper surface of the bottom web to form a seal at a location outside the periphery of the food product, and a vacuum skin package is thereby produced, the top web of the vacuum skin package comprising
   i) a sealant layer comprising an ethylene/alpha olefin copolymer; and
   ii) an oxygen barrier layer comprising a polymer selected from the group consisting of ethylene/vinyl alcohol copolymer, vinylidene chloride copolymer, polyamide, polyacrylonitrile, and polyester, the sealant layer of the top web forming the lower surface of the top web;
e) cooking the food product, contained in the vacuum skin package, in a steam oven, and then
f) refrigerating the food product contained in the vacuum skin package,
the vacuum skin package capable of being subsequently microwaved such that the package self-vents during microwave heating, and such that the top web can be peeled from the bottom web, after microwaving, with a peel strength of less than 0.44 N/mm (2.5 pounds per inch).

### Brief Description of the Drawings

A detailed description of preferred embodiments of the invention follows, with reference to the attached drawings, wherein:
FIG. 1 is a schematic cross-sectional view of a microwaveable package;
FIG. 2 is a schematic cross-sectional view of the microwaveable package of Figure 1, with the top web of the package partially peeled away from the bottom web;
FIG. 3 is a schematic cross-sectional view of a multilayer film useful as a bottom web of the microwaveable package;
FIG. 4 is a schematic cross-sectional view of a multilayer film useful as a top web of the microwaveable package; and
FIG. 5 is a schematic view of a process and apparatus for laminating a bottom web to a support member.

### Definitions

"Ethylene/alpha-olefin copolymer" (EAO) herein refers to copolymers of ethylene with one or more comonomers selected from C₃ to C₁₀ alpha-olefins such as propene, butene-1,hexene-1, octene-1, etc. in which the molecules of the copolymers comprise long polymer chains with relatively few side chain branches arising from the alpha-olefin which was reacted with ethylene. This molecular structure is to be contrasted with conventional high pressure low or medium density polyethylenes which are highly branched with respect to EAOs and which high pressure polyethylenes contain both long chain and short chain branches. EAO includes such heterogeneous materials as linear medium density polyethylene (LMDPE), linear low density polyethylene (LLDPE), and very low and ultra low density polyethylene (VLDPE and ULDPE), such as DOWLEX™ or ATTANE™ resins supplied by Dow, ESCORENE™ or EXCEED™ resins supplied by Exxon; as well as linear homogeneous ethylene/alpha olefin copolymers (HEAO) such as TAFMER™ resins supplied by Mitsui Petrochemical Corporation, EXACT™ resins supplied by Exxon, or long chain branched (HEAO) AFFINITY™ resins supplied by the Dow Chemical Company, or ENGAGE™ resins supplied by DuPont Dow Elastomers.

"Linear low density polyethylene" (LLDPE) herein refers to polyethylene having a density between 0.917 and 0.925 grams per cubic centimeter.

"Linear medium density polyethylene" (LMDPE) herein refers to polyethylene having a density between 0.926 grams per cubic centimeter and 0.939 grams per cubic centimeter.

"Microwaveable", when used in connection with the structures useful for the manufacture of the VSP package of the present invention, herein refers to those structures that are "substantially microwave-transparent" as well as those that are "microwave-active". While substantially microwave-transparent are those capable of being crossed by at least 80%, preferably at least 90% of the microwaves generated by a microwave oven without any sort of interference therewith, the microwave-active are those that incorporate microwave reflective components intended to modify the energy deposition within the adjacent foodstuff. To be "microwaveable" in both cases, under the conditions of use, the packaging material should not be degraded or deformed and it should not release more than 60 ppm of global contaminants to the packaged food in contact therewith. In practice, packaging materials that withstand a heat treatment at 121 °C for ½ hour (conditions that are drastic enough not to be reached normally in microwave cooking) without deforming and releasing less than 60 ppm of contaminants, are considered to be "microwaveable" according to most of the food laws.

"Polymer" herein refers to homopolymer, copolymer, terpolymer, etc. "Copolymer" herein includes copolymer, terpolymer, etc.

"Vacuum skin packaging" is in one sense a type of thermoforming process in which the article to be packaged serves as the mold for the forming web. The article may be placed on a rigid or semi-rigid support member, that can be flat or shaped, e.g., tray-shaped, bowl-shaped or cup-shaped, such as a solid or expanded (foamed) polymeric tray, and the supported article is then passed to a chamber where a top web (such as a polymeric film or laminate) is drawn upward against a heated dome and the softened top web is then draped over the article. The movement of the web is controlled by vacuum and/or air pressure, and the interior of the container is vacuumized before final welding of the top web to the support web. The heated top web thus forms a tight skin around the product and is sealed to the support. The product is thus packaged under vacuum, and the space containing the product is evacuated from gases. It is therefore desirable that both the top web formed around the product and that used for the support member present a barrier to oxygen and other gases detrimental to the shelf or storage life of a food product. Also desirable is a high degree of formability and stretchability, to avoid a common and recurrent problem in such operations: the occurrence of wrinkles and other irregularities in the final packaged product.

All compositional percentages used herein are presented on a "by weight" basis, unless designated otherwise.

### Detailed Description of the Invention

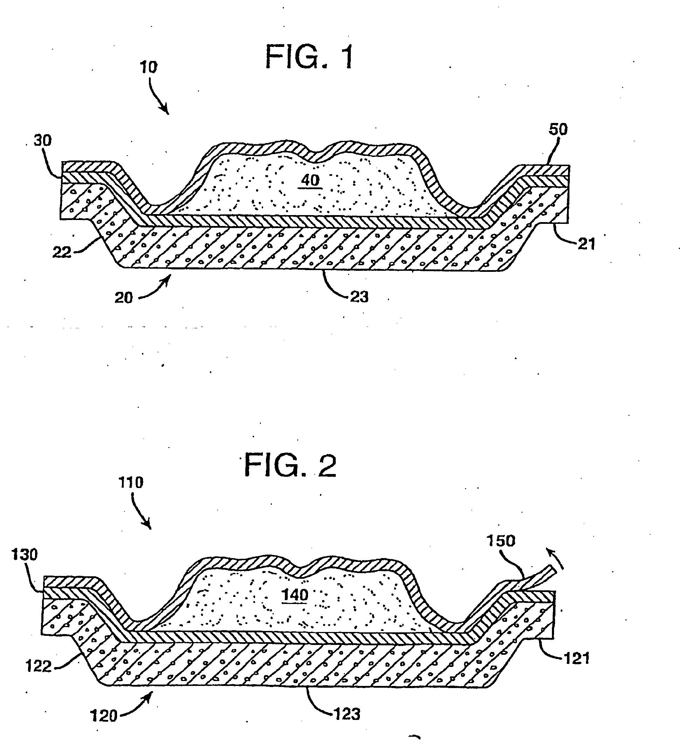

With reference to Figure 1, a microwaveable package 10 includes a support member 20, a bottom web 30, a food product 40; and a top web 50.

### Examples

Support member 20 is preferably rigid or semi-rigid and, in case it is shaped, is preferably thermoformed. Support member 20 can be in the form of a flat or shaped tray, and can be made from any suitable material, including solid or expanded embodiments, such as polypropylene, polystyrene, polyamide, 1,4-polymethylpentene (e.g. TPX™ available from Mitsui), or crystallized polyethylene terephthalate (CPET). Solid polypropylene is preferred because of its strength, its ability to support a food product, and its relatively high melting point. Other materials will be more or less desirable for microwave applications depending on their physical characteristics such as those described above. Thus, although for the sake of clarity the support member 20 is shown in Figure 1 with markings suggesting an expanded or foamed polymer, for many microwave applications a solid tray comprising a polymer with a relatively high melting point is preferred. A preferred formulation for support member 20 comprises a blend of 97%, by weight of the support member, of a polypropylene impact copolymer, and 3%, by weight of the support member, of a black color concentrate. A commercial example of the polypropylene impact copolymer is ACCTUF® 10-3119 available from BP Amoco. This material is believed to be a homopolymer polypropylene with a uniform dispersion therein of an ethylene propylene rubber. Two commercial examples of the black color concentrate are 190695 Black PE MB™ and 190976 Black PP MB™. The 190695 Black PE MB™ has a 20 weight% carbon black loading in a low density polyethylene carrier. Both materials are available from Ampacet Corporation. Prior to any thermoforming step, support member 20 is preferably between 254 and 1270µm (10 and 50 mils) thick, more preferably between 762 and 1016 µm (30 and 40 mils) thick, such as 940 µm (37 mils) thick. If thermoformed into a tray, support member 20 will have different thicknesses in different regions of the tray. For example, the tray flange 21 will typically have a thickness of between 762 and 1016 µm (30 and 40 mils), such as 889 µm (35 mils); the tray sides 22 will typically have a thickness of between 381 and 635 µm (15 and 25 mils), such as 508 µm (20 mils); and the tray bottom 23 will typically have a thickness of between 508 and 762 µm (20 and 30 mils), such as 635 µm (25 mils). The depth of the tray and other factors result in the thinning of the tray sides and tray bottom, accounting for the variations in thickness in different regions of the tray.

The bottom web 30 preferably comprises a multi-layer structure, and preferably comprises at least one layer with gas-barrier properties. The bottom web 30 should adhere adequately to the support member 20 so that delamination of bottom web 30 from the support member 20 will not ordinarily occur during ambient conditions, as well as during microwaving of the package. Bottom web 30 can be adhered to support member 20 by any suitable means, but preferred is heat lamination. Other means for adhering include extrusion lamination, extrusion coating, lamination with adhesives, corona treatment, coextrusion (where the support member and the bottom web form separate layers of a coextrudate), etc. Bottom web 30 can be manufactured by a blown or cast film extrusion process well known in the art.

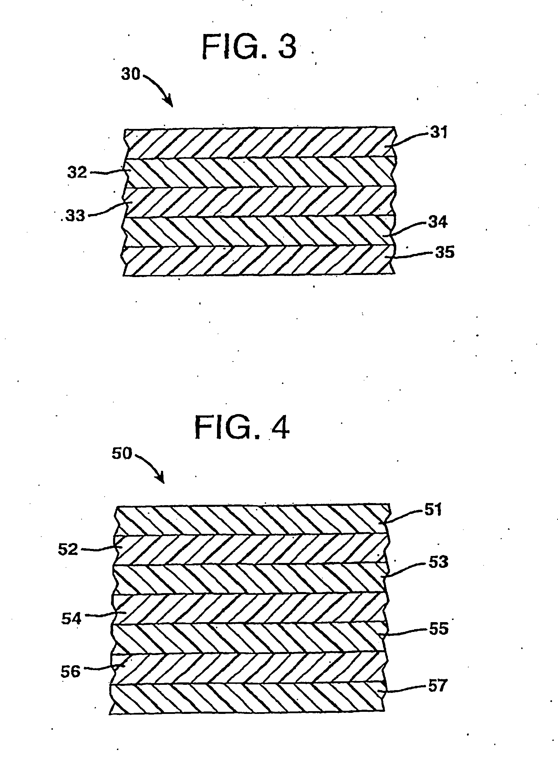

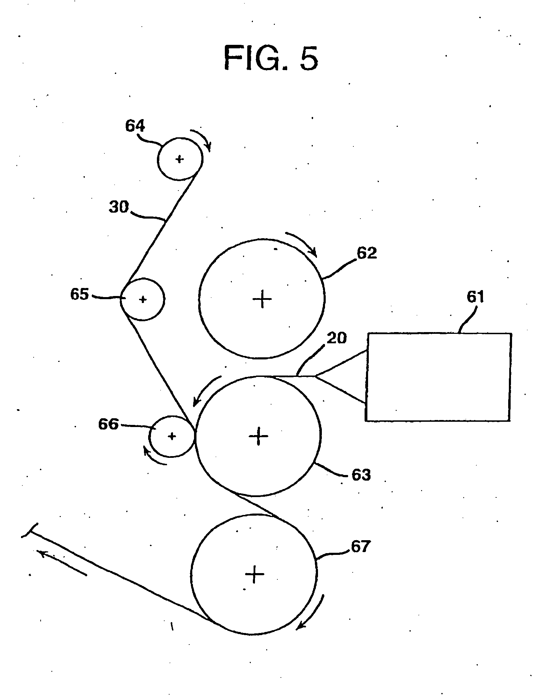

A preferred method of adhering bottom web 30 to support member 20, and the method used in making samples of the bottom web and support member of the invention, is shown in Figure 5. In an in-line extrusion and lamination process, the support member 20 was extruded, as a polypropylene sheet, from an extrusion die 61. Chill rolls 62, 63 and 67 were arranged to advance and cool the support member 20 past a laminating roll 66. At the same time, bottom web 30, comprising a blown film, was fed from feed roll 64, past bow roll 65, to join with support member 20 at middle chill roll 63 as shown in the drawing. Web and roll movement was in the direction indicated by the arrows in Figure 5. The bottom web 30 adhered to the support member 20, at the surface of the bottom web represented by layer 35 of Figure 3. Adhesion of bottom web 30 and support member 20 resulted from the high temperature of the support member (between 126.7 and 160°C (260°F and 320°F)) and also from the applied pressure from the metal laminating roll 66. The chill roll temperatures were 32.2°C (90°F) (chill roll 62), 110°C (230°F) (chill roll 63) and 76.7°C (170°F) (chill roll 67). The laminating roll was not water cooled for the lab line, as the line speed was only 1.83 to 2.44 m/minute (6 to 8 feet/minute (fpm)). In the case of the production line, the laminating roll 66 was coated with a rubber sleeve. The line haul off speed was about 9.45 m/minute (31 fpm).

If the bottom web is a monolayer film, it will comprise a sealant layer that will seal the bottom web at its lower surface to the upper surface of the support member, and also seal the bottom web at its upper surface to the lower surface of the top web. If the bottom web is a multilayer film, it will comprise a sealant layer that will seal the bottom web at its upper surface to the lower surface of the top web. In both cases, the sealant layer of the bottom web comprises, and preferably consists essentially of, a blend of between 60% and 90%, more preferably between 70% and 80%, and most preferably 75%, by weight of the sealant layer, of ethylene/vinyl acetate copolymer; and between 10% and 40%, more preferably between 20% and 30%, and most preferably 25%, by weight of the sealant layer, of polypropylene.

A preferred multilayer embodiment of bottom web 30 is shown in Figure 3, and described in Table 1 below.

**Table 1 (Example 1)**

| Layer # | LAYER COMPOSITION Of Bottom Web 30 | LAYER THICKNESS µm (mils) |
|---|---|---|
| 31 | blend of 23% PP homopolymer, 75% EVA#1, and 2% Antiblock Masterbatch#1 | 15.24 (0.60) |
| 32 | 100% Polymeric Adhesive Resin #11 | 5.08 (0.20) |
| 33 | 100% EVOH#1 | 11.43 (0.45) |
| 34 | 100% Polymeric Adhesive Resin #1 | 5.08 (0.20) |
| 35 | Blend of 96% polyethylene#1 and 4% Slip/antiblock masterbatch | 15.24 (0.60) |
| support member 20 | Blend of 97%PP impact copolymer#1, 3% black color concentrate | 939.8 (37.0) |

In Table 1 above:

### Layer 31

PP homopolymer was ESCORENE™ PP4292.E1 polypropylene having a density of 0.90 gm/cc, available from Exxon-Mobil Chemicals of Houston, Texas;
EVA#1 was ESCORENE® LD 409.09 ethylene/vinyl acetate copolymer having a vinyl acetate content of 9.9% by weight and density of 0.928 gm/cc, available from Exxon-Mobil Chemical Corporation of Houston, Texas; and
Antiblock masterbatch #1 was DOW CORNING®MB50-313, having 50% ultra high molecular weight siloxane in a linear low density polyethylene, available from Dow Coming of Midland, Michigan.

The blend was obtained by thoroughly mixing the components in pellet form and then melt extruding the resulting mixture.

### Layers 32 and 34

Polymeric Adhesive #1 was TYMOR ®1203, anhydride grafted linear low density polyethylene having density of 0.908, available from Rohm & Haas Chemicals of Philadelphia, Pennsylvania;

### Layer 33

EVOH #1 was EVAL® E151A ,an ethylene/ vinyl alcohol copolymer having 44 mole% ethylene, available from Evalca, of Lisle, Illinois.

### Layer 35

Polyethylene # 1 was SLX9103™, an ethylene/hexene/butene terpolymer, a single site catalyzed copolymer having density of 0.901, available from Exxon-Mobil Chemical of Houston, Texas;

Slip/Antiblock masterbatch #1 was FSU93E™, having 9% silica and 3% erucamide carried in a low density polyethylene (LDPE) resin, available from A. Schulman Corp. of Cuyahoga Falls, Ohio.

For reference, in Table 1, support member 20 is shown adjacent layer 35 of bottom web 30. Thus, in practice, a microwaveable package of the invention will preferably include layer 35, which will be adhered by heat lamination, extrusion lamination, extrusion coating, lamination with adhesives, corona treatment, coextrusion, or other suitable means to the upper surface of support member 20. The bond between these two elements should be strong enough to maintain its integrity before, during, and after cooking and microwaving.

Alternatively, as described hereinabove, bottom web 30 will form an integral part of support member 20, and will result from e.g. a coextrusion or extrusion coating process. In this alternative, support member 20 should be viewed, as depicted in the drawings and Table 1, as a substrate, or a portion of a coextrudate, onto which bottom web 30 adheres as part of a coextrudate, or as a result of an extrusion coating or like process.

In some embodiments, a support member can be provided that includes, as an integral component, a inner liner or layer or plurality of layers, or a treated surface, that effectively functions like the bottom web just described. Such a liner, layer or plurality of layers, etc. can form an integral part of the support member, instead of being a discrete member which has been adhered in some fashion, such as by lamination, to the upper surface of the support member. For example, the support member 20 can be made in the form of a coextruded sheet, web, or film that includes an outer liner, layer or layers, or coating that provides the same sealing functionality, with respect to the lower surface of the top web, as that described herein for the upper surface of bottom web 30. Thus, such alternatives are within the scope of the present invention, and the term "bottom web" as used throughout the present specification and claims, should be read to include either equivalent alternative: a discrete web or film or coating that is separately made and then laminated, extrusion laminated, or otherwise adhered to a substrate tray, sheet, or other support member (this mode being the primary one described herein); or alternatively a layer, liner, or coating that is integral with the support member, and generally manufactured at the same time as the support member, by e.g. a coextrusion or extrusion coating process.

The composition of the sealant layer of the bottom web (see also Figure 3 and layer 31 of Table 1) includes a propylene homopolymer. As an alternative, a propylene copolymer having an ethylenic moiety can be used. In this alternative embodiment, the percent of the propylene/ethylene copolymer (PER) used in the blend should be increased generally in proportion to the weight percent of ethylene comonomer in the PER, since the presence of ethylene in the PER will, all things being equal, tend to strengthen the seal between the top and bottom webs.

Bottom web 30 is preferably between 12.7 and 254 µm (0.5 and 10 mils) thick, more preferably between 2.54 and 152.4 µm (1 and 6 mils) thick, most preferably between 38.1 and 101.6 µm (1.5 and 4 mils) thick, such as 50.8 µm (2 mils) or 76.2 µm (3 mils) thick.

The top web 50 preferably comprises a multi-layer structure, and also preferably comprises at least one layer with gas-barrier properties. The top web 50 should adhere adequately to the upper surface of the bottom web 30 so that delamination of top web 50 from the bottom web 30 will not ordinarily occur during ambient conditions. After microwaving, the upper surface of bottom web 30 and the lower surface of top web 50 form a peelable interface, which is discussed in more detail below. Top web 50 adheres to bottom web 30 when the top web, in heated condition during a VSP operation, is draped down over the food product and makes contact with the exposed portion of the food product, as well as with the upper surface of the bottom web 30 in locations of the package outside the periphery of the food product.

Whether the top web 50 is a monolayer or multilayer film, it will comprise a sealant layer that will seal the top web at its lower surface to the upper surface of the bottom web 30. In both cases, the sealant layer of the bottom web comprises, and preferably consists essentially of, an ethylene/alpha olefin copolymer. A preferred multilayer embodiment of top web 50 is shown in Figure 4, and described in Table 2 below. This material is a commercially available VSP film available from Cryovac, and sold as CRYO-VAC™ V836HB. Top web 50 can be manufactured by a blown or cast film extrusion process well known in the art.

**TABLE 2**

| LAYER # | LAYER COMPOSITION | LAYER THICKNESS µm (mils) |
|---|---|---|
| 51 | Blend of 95% HDPE #1 and 5% Antiblock masterbatch #2 | 9.90 (0.39) |
| 52 | 100% EVA#2 | 47.75 (1.88) |
| 53 | 100% Polymeric Adhesive Resin #2 | 11.94 (0.47) |
| 54 | 100% EVOH #1 | 13.21 (0.52) |
| 55 | 100% Polymeric Adhesive Resin #2 | 11.94 (0.47) |
| 56 | 100%EVA#2 | 47.75 (1.88) |
| 57 | Blend of 95% Polyethylene #2 and 5% Antiblock masterbatch #2 | 11.94 (0.47) |

In Table 2 above:

### Layer 51

HDPE #1 was FORTIFLEX™ J60-500C-147, a high density polyethylene resin from Solvay Corp.

Antiblock Masterbatch #2 was 10075ACP™, having 10% SYLOID™ carried in a low density polyethylene, available from Teknor Color Corporation, Rhode Island;

### Layers 52 and 56

EVA#2 was ELVAX™ 3165, an ethylene/vinyl acetate copolymer having 18%, by weight of the copolymer, of vinyl acetate, available from DuPont Corp. of Wilmington, Delaware;

### Layers 53 and 55

Polymeric Adhesive Resin #2 was BYNEL™ CXA4125, an anhydride grafted LDPE resin, available from DuPont Corp. of Wilmington Delaware;

### Layer 54

EVOH #1 was EVAL® E151A, an ethylene/vinyl alcohol copolymer having 44 mole% ethylene, available from Evalca, of Lisle, Illinois; and

### Layers 57

Polyethylene #2 was DOWLEX™ 2244A, an ethylene/ octene copolymer, available from Dow Chemicals of Freeport, Texas.

Layer 57 is the sealant layer of the top web that will contact the food product 40, and will seal, in areas outside the periphery of the food product, to sealant layer 31 of bottom web 30.

Top web 50 is preferably between 2.54 and 304.8 µm (1 and 12 mils) thick, more preferably between 76.2 and 254 µm (3 and 10 mils) thick, most preferably between 127 and 203.2 µm (5 and 8 mils) thick, such as 177.8 µm (7 mils) thick.

Both bottom web 30 and top web 50 can be made by any suitable process, including coextrusion, extrusion coating, extrusion lamination, and conventional lamination using polyurethane or other adhesives. This manufacturing processes are well known in the art. Extrusion can be done in annular or flat dies. The extrudate can be hot blown or stretch oriented as desired. Chemical or electronic crosslinking of one or more layers of the webs can be done.

Food product 40 can be any food product that lends itself to microwave cooking, thawing, or reheating. Of particular utility is the microwaving of whole muscle or processed or emulsified meats.

Both the bottom web and the top web preferably comprise a gas barrier layer. This is shown as layer 33 of bottom web 30 (Figure 3 and Table 1) and layer 54 of top web 50 (Figure 4 and Table 2). The gas barrier layer generally includes a polymeric material with low oxygen transmission characteristics, such as PVDC, EVOH, polyamides, polyesters, polyacrylonitrile (available as Barex™ resin), or blends thereof.

PVDC is any vinylidene chloride copolymer wherein a major amount of the copolymer comprises vinylidene chloride and a minor amount of the copolymer comprises one or more unsaturated monomers copolymerizable therewith, typically vinyl chloride, and alkyl acrylates or methacrylates (e.g. methyl acrylate or methyl methacrylate) and the blends thereof in different proportions. Generally a PVDC barrier layer will contain plasticizers and/or stabilizers as known in the art.

EVOH is the saponified product of ethylene/vinyl ester copolymer, generally of ethylene/vinyl acetate copolymer, wherein the ethylene content is typically between 20 and 60 mole % of the copolymer, and the degree of saponfication is generally higher than 85%, preferably higher than 95%.

Polyamides used as gas barrier layer can be homo- or co-polyamides. This term specifically includes those aliphatic polyamides or copolyamides commonly referred to as e.g. polyamide 6 (homopolymer based on ε- caprolactam), polyamide 69 (homopolycondensate based on hexamethylene diamine and azelaic acid), polyamide 610 (homopolycondensate based on hexamethylene diamine and sebacic acid), polyamide 612 (homopolycondensate based on hexamethylene diamine and dodecanoic acid), polyamide 11 (homopolymer based on 11-aminoundecanoic acid); polyamide 12 (homopolymer based on ω-aminododecanoic acid or on laurolactam), polyamide 6/12 (polyamide copolymer based on ε-caprolactam and laurolactam), polyamide 6/66 (polyamide copolymer based on ε-caprolactam and hexamethylenediamine and adipic acid), polyamide 66/610 (polyamide copolymers based on hexamethylenediamine, adipic acid and sebacic acid), modifications thereof and blends thereof. crystalline or partially crystalline, aromatic or partially aromatic, and amorphous polyamides can be used as gas barriers.

The thickness and composition of the gas barrier layer will be suitably selected in order to provide the overall structure with an oxygen transmission rate (evaluated by ASTM D3985) of less than 150 cm³/m².atm.d, at room temperature and 0% relative humidity, preferably less than 100, and even more preferably less than 50 cm³/m².atm.d, such as less than 25, less than 15, and less than 5 cm³/m².atm.d.

Other layers can be present in both the bottom and top webs. Said additional layers can serve the purpose of providing the necessary bulk to the webs, or improving their mechanical properties, i.e. increased puncture resistance, increased abuse resistance, etc., or to better tie the various layers one to the other. Any type of microwaveable resin can be employed for these purposes.

For initial evaluation of the seal strength of the seal of the top web to the bottom web, the top and bottom web samples were in each case brought together in face to face relationship. One edge of the two adjoining webs was sealed together to form a one inch wide seal along the length of the two juxtaposed sheets. The seal was made using a seal bar at a temperature of 162.8°C, at 0.28 N/mm² (325°F, at 40 psi), for 1.0 second. Seals were made using a Sencorp Sealer Model No. 12ASL/1, using a 2.54 cm (one inch) strip cutter. Strips of each sealed sample, about 2.54 cm (one inch) wide and 22.9 cm (nine inches) long, including the sealed edge, were then tested on an INSTRON™ tensile tester. The samples were tested using a standard ASTM T peel test method (ASTM F 904-98) with a crosshead speed of 25.4 cm (10 inches)/minute and a jaw gap of 2.54 cm (one inch). In this method, the unsealed edges of the two webs are gripped by separate clamps, and then pulled apart. The sealed edge is thus gradually pulled apart, while a dynamometer registers readings of the force involved. Strong seals will result in some thinning (mechanical yielding) of the webs, followed by a relatively abrupt failure of the seal at e.g. 0.7 to 1.40 N/mm (4 to 8 pounds per inch). If the seal is peelable, the seal will slowly and steadily pull apart at a force of e.g. 0,53 N/mm (3 pounds per inch).

For the evaluation of the peel strength of the seal of the top web to the bottom web in a finished package, the following internal standard procedure can be employed: strips having a width of 2.54 cm (one inch) and a length of 30.48 cm (12 inches) are cut from the VSP packages prepared starting from the suitably selected top and bottom webs sealed together in a VSP packaging cycle (e.g., using a MULTIVAC^{®} T570 machine) under the setting conditions of actual use. The strips are manually separated until the bottom web can be fixed into the lower clamp of a dynamometer, and the top web can be fixed into the upper clamp of a dynamometer. The area to be tested should lie in the middle of the two clamps, and an adequate tensioning between the two extremities of the fixed sample should be obtained. The peel strength is measured with a crosshead speed of 25.4 cm (10 inches)/min and a jaw distance of 2.54 cm (1 inch.

The VSP package according to the present invention does not require any puncturing of the top web nor any loosening of the top web in order to effect releasing of the vapor overpressure that builds up during the microwave treatment. The package can placed in the microwave oven, subject to conventional microwave energy, and thus heated without any problem. At first the water vapor released by the food product during the microwave step will raise the top web over the product, in a ballooning effect, thus creating a vapor cushion around the product that maintains the product texture and taste. If a rigid support member, such as a rigid tray, is used, the tray will distort only minimally during this "ballooning" phase of the microwave step. If a semi-rigid or flexible support member is used, more extensive distortion of the support member will occur. When the vapor pressure reaches a threshold value, the package opens up and the excess vapor is vented off between the upper and lower webs of the package around the periphery of the package. At the end of the microwaving step, when no additional vapor is generated by the product, the top web lowers on the food product with few wrinkles or plies, because it has not been overstretched during microwaving. The package can then be withdrawn from the microwave oven, the top web removed, and the food product can be served, if desired, directly on the support member. Because the hot vapor has been vented off during the microwave step, removing the top web from the package after microwaving is less hazardous than with conventional packages.

The present invention provides that the top web, before microwaving, is sealed to the bottom web with a seal having a peel force of at least 0.7 N/mm (4 pounds per linear inch), preferably at least 0.79 N/mm (4.5 pounds per linear inch), and most preferably at least 0.88 N/mm (5 pounds per linear inch), such as at least 1.05, 1.23 or 1.40 N/mm (6, 7, or 8 pounds per linear inch). In addition, after microwaving, the top web is peelably sealed to the bottom web with a seal having a peel force of less than 0.44 N/mm (2.5 pounds per linear inch), preferably less than 0.35 N/mm (2 pounds per linear inch), and most preferably less than 0.26 N/mm (1.5 pounds per linear inch), such as less than 0.18 N/mm (1 pound per linear inch).

The present invention provides that the top web, before microwaving, is sealed to the bottom web with a seal having a peel force of between 0.7 and 1.75 N/mm (4 and 10 pounds per linear inch), and preferably between 0.79 and 1.58 N/mm (4.5 and 9 pounds per linear inch), such as between 0.88 and 1.40 N/mm (5 and 8), and between 1.05 and 1.23 N/mm (6 and 7 pounds per linear inch). In addition, after microwaving, the top web is peelably sealed to the bottom web with a seal having a peel force of between 0.09 and 0.44 N/mm (0.5 and 2.5 pounds per linear inch), such as between 0.18 and 0.35 N/mm (1 and 2 pounds per linear inch).

Figure 2 shows the microwaveable package of the invention after the microwaving step has been completed. Reference numbers in Figure 2 correspond to like numbers in Figure 1, but with a "1" prefix added. The top web is shown being partially peeled away from the bottom web along the seal interface defined by sealant layer 31 of bottom web 30, and sealant layer 57 of top web 50.

An advantage of the present invention is that a food product can be placed on the bottom web of a package of the invention, and covered with a top web as disclosed herein, and in this condition can be cooked by a food processor, distributed to a retailer, purchased by a consumer, microwaved, and served, without the need for transferring the food product at any time during this marketing sequence. The initial cook time by the food processor, which cooking can be done in steam ovens, would typically be at about 71.1 to 82.2°C (160° to 180°F) for 4 to 10 hours.

### Additional Examples

Seal strengths for Sealant & Adherent Layers

Three additional examples of a bottom web were produced on a small blown film line. These examples were formulated like example 1 above, but with changes in the outermost layers (layers 31 and 35). On the sealant side (corresponding to layer 31 of the bottom web 30 in contact with the food product 40 and the top web 50), an effort was made to provide a stronger seal between the top and bottom webs, without compromising the self-venting functionality or ultimate post-microwave peelability of the package. On the adherent side (corresponding to layer 35 of the bottom web 30 in contact with the support member 20), an effort was made to provide a stronger seal between the bottom web 30 and the upper surface of support member 20, so that the bottom web 30 would not delaminate from the support member 20 after the microwave cooking or reheating step was completed.

The seal strength data are shown in Table 3. In column 3 of Table 1, marked "Average Seal Strength (lbs.) between bottom and top webs", these represent values before microwaving. These values should therefore ideally be high enough to ensure package integrity up to the time the package is microwaved.

Comparative Example 1, having 100% ELTEX™ P KS 409 propylene/ethylene copolymer, showed only weak adhesion 0.56 N/mm; (3.17 pounds/inch) to the top web 50. It is believed that a seal strength of at least 0.7 N/mm (4 pounds/inch) is required for many applications. Comparative Example 2 and Example 2 showed relatively high seal strengths (1.09 and 1.14 N/mm) (6.21 and 6.50) respectively) at the bottom web/top web seal interface.

On the adherent side (i.e. the bottom web/support member interface), Comparative Example 1 showed limited adhesion to the support member 20. Comparative Example 2 and Example 2 each showed better adhesion to the support member 20 (0.36 and 0.42 N/mm (2.08 and 2.44 pounds/inch) respectively) than Comparative Example 1. However, the estimated peel strength of the sealant of Comparative Example 2 after microwaving (peel strength of the bottom web/top web seal) was between about 0.52 and 0.7 N/mm (3 and 4 pounds/inch). This is believed to be too strong a seal to be considered peelable for this application. In contrast, Example 2 had an estimated post-microwave peel strength of between about 0.26 and 0.35 N/mm (1.5 and 2 pounds/inch). (Comparative Example 1 had an estimated peel strength, after microwaving, of less than 0.18 N/mm (1 pound/inch)). The peel strengths after microwaving are only estimated. In testing, a subjective analysis of ease of peel was done for each sample, after a simulation of a microwaving step, with the scoring ranging from 1 (extremely easy peel, almost no seal) to 5 (very difficult or impossible to manually peel). Thus, column 4 of Table 3, marked "ease of peel after microwaving", expresses the subjective values for the seal strength between the bottom web and top web, after microwaving, for each example.

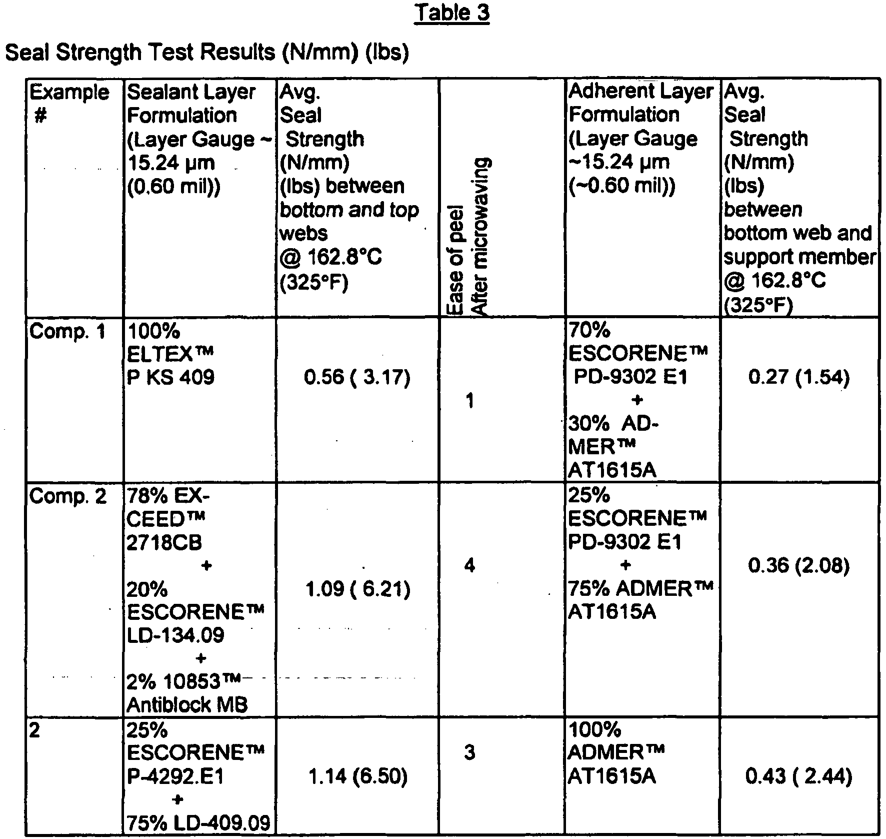

In Table 3:
ELTEX™ P KS 409 was propylene-ethylene copolymer having 3.2% ethylene, available from Solvay.
ESCORENE™ PD-9302 E1 was an propylene-ethylene copolymer having 3.3 weight % ethylene, available from Exxon-Mobil Corp. of Houston, Texas. Admer™ AT1615A was an anhydride grafted metallocene catalyzed LLDPE available from Mitsui Chemicals.
EXCEED™ 2718CB was metallocene catalyzed ethylene/1-hexene copolymer having a density of 0.918 gm/cc, available from Exxon-Mobil Corp. of Houston, Texas.
ESCORENE™ LD-134.09 was low density polyethylene resin having density of 0.920 gm/cc available from Exxon-Mobil Corp. of Houston, Texas.
10853™ antiblock masterbatch consists of 20% diatomaceous earth in LLDPE resin available from Ampacet Corp. of Tarrytown, New York.
ESCORENE™ PP-4292.E1 was a polypropylene homopolymer available from Exxon Mobil Corp. of Houston, Texas.
ESCORENE™ LD-409.09 was an ethylene/vinyl acetate copolymer, having 9.9 weight % vinyl acetate, available from Exxon Mobil Corp. of Houston, Texas

### Comparative Seal Strength for Sealant Only

Peelable blends were tested at varying sealing temperatures. The samples tested were monolayer films about 152.4µm (6 mil) in thickness. They were prepared on a Leistritz twin-screw extruder in the lab using a slot die. The films were about 10.16 cm (4 inch) wide. The specimens prepared for testing were 2.54 cm (one inch) wide. The film samples were heat sealed to a VSP top web (2.54 cm (1") wide) at 162.8°C (325°F). The seal strength data are shown in Table 4. The peel strength data showed the reduction of the PP in a PP/EVA blend helped to improve peel strength values.

**Table 4**

| Seal Strength Results N/mm (pounds/inch) | | | | |
|---|---|---|---|---|
| | | Seal Temp. 162.8°C (325°F) | | |
| # | | Average | Minimum | Maximum |
| Comp. Ex. 3 | 15% ESCORENE™ P-4292.E1 | 0.65 (3.7) | 0.46 (2.6) | 0.75 (4.3) |
| | + | | | |
| | 85% ESCORENE™ LD-409.09 | | | |
| Ex. 3 | 40% ESCORENE™ P-4292.E1 | 0.23 (1.3) | 0.19 (1.1) | 0.23 (1.3) |
| | + | | | |
| | 60% ESCORENE™ LD-409.09 | | | |

### Thermoforming Machine

A lab thermoformer was used to form trays. This was a one-up forming machine. The sheet sample was heated first and then formed using an aluminum mold with a syntactic plug. The formed sample was trimmed using a steel rule knife on a clicker press.

### Microwave Heating

The tray samples were filled with a selected food (e.g. sliced barbecue pork) and then sealed with a VSP top web on a Multivac machine. The meal was cooked in the sealed trays for 8 hrs at 87.8°C (190°F) using a steam heated chamber. Then the trays were refrigerated. The adhesion of the top web was still very good or not easy to open. The trays were heated in a microwave for 3 to 4 minutes on a high setting (1000 watts) of a microwave. This was to evaluate how the top web allows for self-venting and easy peel after cooking. With sealants of the invention, self-venting was noticed within one minute of microwave heating. The trays were then removed from microwave. The top web peeled easily from the bottom web.

### Tray Weight and Size and Color

Most of the trays used in the development were 22.35 cm x 11.7 cm x 4.45 cm (8.8"x4.64"x 1.75") (LxWxD) or CRYOVAC® CS957. The tray weight varied around 22 to 24 gms. This was based on a total 1016 µm (40 mil) thick laminated sheet. All the trays tested were black in color.

As used herein, "seal strength" and "peel strength" are used inter-changeably, and reflect the strength of the bond between adjacent webs (the bottom and top web) or between the bottom web and the support member. The seal or peel strength is determined by the T-peel method of ASTM F 904-98.

## Claims

1. A method of preparing a microwaveable vacuum skin package comprising:
a) providing a support member having an upper surface and a lower surface;
b) providing a bottom web having an upper surface and a lower surface, the bottom web comprising
i) a sealant layer comprising a blend of between 60% and 90%, by weight of the sealant layer, of ethylene/vinyl acetate copolymer, and between 10% and 40%, by weight of the sealant layer, of polypropylene or propylene/ethylene copolymer; and
ii) an oxygen barrier layer comprising a polymer selected from the group consisting of ethylene/vinyl alcohol copolymer, vinylidene chloride copolymer, polyamide, polyacrylonitrile, and polyester;
the sealant layer of the bottom web forming the upper surface of the bottom web; and
the lower surface of the bottom web adhered to the upper surface of the support member;
c) placing a food product on the upper surface of the bottom web;
d) covering the food product with a top web, the top web having an upper and lower surface, by draping the top web over the food product, in a vacuum skin packaging process, such that the top web substantially conforms to the shape of the food product; and such that the top web is sealed at its lower surface to the upper surface of the bottom web to form a seal at a location outside the periphery of the food product, and a vacuum skin package is thereby produced, the top web of the vacuum skin package comprising
i) a sealant layer comprising an ethylene/alpha olefin copolymer; and
ii) an oxygen barrier layer comprising a polymer selected from the group consisting of ethylene/vinyl alcohol copolymer, vinylidene chloride copolymer, polyamide, polyacrylonitrile, and polyester,
the sealant layer of the top web forming the lower surface of the top web;
e) cooking the food product, contained in the vacuum skin package, in a steam oven, and then
f) refrigerating the food product contained In the vacuum skin package,
the vacuum skin package capable of being subsequently microwaved such that the package self-vents during microwave heating, and such that the top web can be peeled from the bottom web, after microwaving, with a peel strength of less than 0.44 N/mm (2.5 pounds per inch).

2. The method of claim 1 wherein the food product contained in the vacuum skin package is cooked at between about 71.1 and 87.8°C (160 and 190°F) for from 4 to 10 hours.

## Patentansprüche

1. Verfahren zur Herstellung einer mikrowellengeeigneten Hautverpackung, bei dem
a) ein Trägerelement mit einer oberen Oberfläche und einer unteren Oberfläche bereitgestellt wird,
b) eine Unterfolie mit einer oberen Oberfläche und einer unteren Oberfläche bereitgestellt wird, die
(i) eine Siegelschicht umfassend eine Mischung von 60 bis 90 Gew.% bezogen auf die Siegelschicht eines Ethylen/Vinylacetat-Copolymers und 10 bis 40 Gew.% bezogen auf die Siegelschicht eines Polypropylens oder Propylen/Ethylen-Copolymers und
(ii) eine ein Polymer ausgewählt aus der Gruppe bestehend aus Ethylen/Vinylalkohol-Copolymer, Vinylidenchlorid-Copolymer, Polyamid, Polyacrylonitril und Polyester umfassende Sauerstoffsperrschicht umfasst,
wobei die Siegelschicht der Unterfolie die obere Oberfläche der Unterfolie bildet und
die untere Oberfläche der Unterfolie an der oberen Oberfläche des Trägerelements haftet,
c) ein Nahrungsmittelprodukt auf die obere Oberfläche der Unterfolie platziert wird,
d) das Nahrungsmittelprodukt mit einer eine obere und eine untere Oberfläche aufweisenden Oberfolie durch Drappieren der Oberfolie über das Nahrungsmittelprodukt in einem Vakuumhautverpackungsverfahren so abgedeckt wird, dass die Oberfolie sich im Wesentlichen an die Form des Nahrungsmittelprodukts anpasst und dass die Oberfolie mit ihrer unteren Oberfläche an die obere Oberfläche der Unterfolie gesiegelt wird, um eine Versiegelung in einer Position außerhalb der Peripherie des Nahrungsmittelproduktes zu bilden, und dadurch eine Vakuumhautverpackung hergestellt wird, deren Oberfolie
(i) eine ein Ethylen/alpha-Olefin-Copolymer umfassende Siegelschicht und
(ii) eine ein Polymer ausgewählt aus der Gruppe bestehend aus Ethylen/Vinylalkohol-Copolymer, Vinylidenchlorid-Copolymer, Polyamid, Polyacrylnitril und Polyester umfassende Sauerstoffsperrschicht umfasst,
wobei die Siegelschicht der Oberfolie die untere Oberfläche der Oberfolie bildet,
e) das in der Vakuumhautverpackung enthaltene Nahrungsmittelprodukt in einem Dampfgarofen gegart wird und dann
f) das in der Vakuumhautverpackung enthaltene Nahrungsmittelprodukt tiefgekühlt wird,
wobei die Vakuumhautverpackung geeignet ist, anschließend mittels Mikrowellen so erhitzt zu werden, dass sich die Packung während der Mikrowellenerhitzung selbst entlüftet und die Oberfolie nach der Mikrowellenbehandlung mit einem Abziehwiderstand von weniger als 0,44 N/mm (2,5 Pfund je Zoll) von der Unterfolie abgezogen werden kann.

2. Verfahren nach Anspruch 1, bei dem das in der Vakuumhautverpackung enthaltene Nahrungsmittelprodukt zwischen etwa 71,1 und 87,8°C (160 und 190°F) für 4 bis 10 Stunden gegart wird.

## Revendications

1. Procédé de préparation d'un emballage moulant sous vide, pour micro-ondes, comprenant:
a) réaliser un élément de support ayant une surface supérieure et une surface inférieure;
b) réaliser une bande de fond ayant une surface supérieure et une surface inférieure, la bande de fond comprenant
i) une couche d'étanchéité comprenant un mélange entre 60% et 90% en poids de la couche d'étanchéité d'un copolymère d'éthylène/acétate de vinyle et entre 10% et 40% en poids de la couche d'étanchéité, de polypropylène ou d'un copolymère de polypropylène/éthylène; et
ii) une couche formant barrière à l'oxygène comprenant un polymère sélectionné dans le groupe consistant en copolymère d'éthylène/alcool vinylique, copolymère de vinylidène chlorure, polyamide, polyacrylonitrile et polyester;
la couche d'étanchéité de la bande de fond formant la surface supérieure de la bande de fond; et
la surface inférieure de la bande de fond adhérant à la surface supérieure de l'élément de support;
c) placer un produit alimentaire sur la surface supérieure de la bande de fond;
d) couvrir le produit alimentaire avec une bande de dessus, la bande de dessus ayant une surface supérieure et inférieure, en drapant la bande de dessus sur le produit alimentaire, lors d'un processus d'emballage moulant sous vide de sorte que la bande de dessus s'adapte sensiblement à la forme du produit alimentaire; et de telle sorte que la bande de dessus est scellée à sa surface inférieure à la surface supérieure de la bande de fond pour former un joint à un emplacement à l'extérieur de la périphérie du produit alimentaire, et un emballage moulant sous vide est ainsi produit, la bande supérieure de l'emballage moulant sous vide comprenant
i) une couche d'étanchéité comprenant un copolymère d'éthylène/alpha-oléfine; et
ii) une couche formant barrière à l'oxygène comprenant un polymère sélectionné dans le groupe consistant en copolymère d'éthylène/alcool vinylique, copolymère de vinylidène chlorure, polyamide, polyacrylonitrile et polyester,
la couche d'étanchéité de la bande de dessus formant la surface inférieure de la bande de dessus;
e) cuire le produit alimentaire, se trouvant dans l'emballage moulant sous vide, dans un four à vapeur, et ensuite
f) réfrigérer le produit alimentaire se trouvant dans l'emballage moulant sous vide,
l'emballage moulant sous vide est apte à être ensuite soumis à des micro-ondes de telle sorte que l'emballage s'auto-ventile durant l'échauffement par micro-ondes et de telle sorte que la bande de dessus peut être décollée de la bande de dessous, après la soumission à des micro-ondes, avec une résistance au pelage inférieure à 0,44 N/mm (2,5 livres par pouce).

2. Procédé selon la revendication 1, dans lequel le produit alimentaire se trouvant dans l'emballage moulant sous vide est cuit entre environ 71,1 et 87,8°C (160 et 190°F) pendant 4 à 10 heures.
